# EUROPÄISCHE PATENTANMELDUNG

(11) **EP 2 597 482 A1**
(43) Veröffentlichungstag der Anmeldung: **29.05.2013**
(21) Anmeldenummer: 11190185.6
(22) Anmeldetag: 22.11.2011
(51) Int. Cl.: G01S 7/486, G01S 7/497

(54) **Vorrichtung und Sensor zur Abstandsmessung mittels der Laufzeit von kompensierten Impulsen**

(71) Anmelder: ELMOS Semiconductor AG, 44227 Dortmund (DE)
(72) Erfinder: Die Erfindernennung liegt noch nicht vor
(74) Vertreter: Durm & Partner

(57) **Zusammenfassung**

Die Erfindung betrifft ein Verfahren und eine Vorrichtung zur Lichtlaufzeitmessung mit den Schritten:
― Einspeisen mindestens eines Basissignals (2), das für die Erzeugung von Impulsen, vorzugsweise Spikes oder Bursts, bei Eintreten vordefinierter Signalbedingungen für diese Basissignale ― insbesondere steigende und / oder fallende Flanken eines digitalen Bit-Stromes - genutzt wird, mit einem minimalen Impulsabstand, der mindestens die maximal zu erfassende Laufzeit, insbesondere das doppelte der zu erfassenden Laufzeit, beträgt;
― Erzeugung von mindestens einem mit Impulsen behaftetem Signal (4) aus den besagten Basissignalen (2), wobei typischerweise die Impulsdauer kleiner als die Zeitkonstante eines Tiefpasses erster Ordnung ist, der das zeitliche Verhalten des langsamsten verwendeten Empfangskanals und/oder Empfängers (12) approximiert;
― Senden mindestens eines durch besagte Impulse gepulsten, Signal tragenden Flusses, insbesondere eines gepulsten Lichtsignals, von mindestens einem ersten Sender (7), insbesondere einer Lichtquelle, in wenigstens eine Signaltransportstrecke (41), insbesondere eine Lichtstrecke, mit mindestens einer ersten Laufzeit an wenigstens einen Empfänger (12) zur Erfassung mindestens einer Laufzeit oder Veränderung der Laufzeit der ersten Signale (6) vom ersten Sender (7) zum Empfänger (12), insbesondere infolge der Modifikation der Sende-Transport- Empfangsstrecke (7,41,12) insbesondere als Folge von Annäherung, Anwesenheit und/oder Entfernung von Objekten (45);
― Senden mindestens eines - typischerweise stets positiven - zweiten Signals (Kompensationssignals) (19) durch einen zweiten Sender (20), das gegenüber dem Impuls behafteten Signal (6) des ersten Senders (7) regelbar verzögert oder in der Phasenlage verändert ist und das derart geformt und in der Amplitude ausgeregelt ist, dass es bei zeitlicher Stabilität bei Summenbildung mit dem Impuls behafteten Signal (6) des ersten Senders (7) im Wesentlichen ein positives Konstantsignal (11) am Empfänger (12) bildet, wobei die Übertragungseigenschaften der Sende-Transport-Empfangsstrecke (20, 42, 12) vom zweiten Sender (20) zum Empfänger (12) typischerweise bekannt sind;
― Empfangen der ersten Signale (41) und der zweiten Signale (42) mittels wenigstens eines Empfängers (12);
― Ermitteln des aus den ersten Signalen (41) und zweiten Signalen (42) resultierenden Summensignals (43) durch Überlagerung am Empfänger (12) und Wandlung in ein Nutzsignal (11);

## Beschreibung

Die Erfindung betrifft ein Verfahren und eine Vorrichtung zur Lichtlaufzeitmessung, insbesondere für Abstandsmessungen. Eine Abstandsmessung ist beispielsweise in EP1913420B1 offenbart. Einige der folgenden Abschnitte, die die allgemeine Problematik betreffen, sind dieser in wesentlichen Teilen entnommen ohne dass, wie im Folgenden erläutert wird, die hier beschriebene Erfindung durch EP1913420B1vorweggenommen wird.

In vielen Anwendungsbereichen muss die Entfernung eines Bezugsobjektes zu anderen Objekten bestimmt werden. Ein derartiger Einsatzbereich sind vor allem Abstandsmesssysteme, beispielsweise auch im Fahrzeugbereich, im Bereich der Robotik oder der Automatisierungstechnik.

Wie in EP1913420B1 beschrieben, ergibt sich folgende Problematik: Legt man an eine Leuchtdiode eine getaktete Spannung an, so leuchtet sie im Rhythmus dieser angelegten Spannung. Ein reflektierender Gegenstand kann die abgestrahlte Lichtleistung zu einer Photodiode vorzugsweise in der Nähe der sendenden LED reflektieren. Das zurückgeworfene Signal ist in seiner Größe abhängig von der Sendeleistung der LED, dem Reflexionsgrad des Gegenstandes und dem Abstand des Gegenstandes von der sendenden LED. Die typische Größenordnung eines Photostromes liegt im Bereich von einigen pA in der Photodiode.

Dieser Photostrom ist proportional zum inversen der vierten Potenz des Abstands vom reflektierenden Gegenstand. Bei Entfernungen von größer einem Meter kann er daher- bei einer Ansteuerung wie EP1913420B1 beschrieben - dieser Photostrom möglicherweise nur noch einige pA betragen. Um die Entfernung des reflektierenden Gegenstandes zu messen, bietet sich zwar eine Laufzeitmessung zwischen gesendetem und empfangenem Signal an, jedoch ist es bei den oben genannten sehr kleinen Empfangsströmen in der Photodiode sehr schwierig, den genauen Eintreffpunkt zu ermitteln. Bei noch größeren Abständen wird diese Aufgabe nahezu unmöglich.

Erschwerend kommt laut EP1913420B1 hinzu, dass das eintreffende Signal in der Photodiode bzw. den angeschlossenen Verstärkern nicht die Flankensteilheit erzeugt, mit der es ausgesandt wurde. Praktisch jeder Photodetektor, insbesondere eine Photodiode, wirkt als Tiefpass. Zur Vereinfachung wird für die folgenden Abschnitte angenommen, dass dieses Verhalten durch ein Tiefpassmodell erster Ordnung angenähert werden kann.

Eine weitere gegenläufige Anforderung ist eine hohe Photonenausbeute des Photodetektors. Eine einfache Möglichkeit zur Steigerung dieser Ausbeute ist die Vergrößerung der Fläche, was aber wieder eine Verlangsamung des Photodetektors, also einer Verstärkung des Tiefpasscharakters zur Folge hat.

Um 15 cm Abstände, was einer Lichtstrecke von 30 cm entspricht, auflösen zu können, müssen Laufzeiten von 1ns aufgelöst werden können. Aufgrund des Tiefpassverhaltens der oben genannten Photodiode und des Vorverstärkers kann die Anstiegszeit des Empfangssignals durchaus 10 ps betragen. Auch die sendende LED hat eine merkliche Anstiegszeit, jedoch liegt sie typischerweise um Größenordnungen unter dem Tiefpassverhalten der Photodioden. Übliche Werte liegen im Bereich von 5 bis 10 ns.

Das Detektieren des genauen Eintreffzeitpunktes des Reflexionssignals bereitet somit erhebliche Schwierigkeiten.

Allgemein ist bekannt, dass eine Messung ab ca. 3 m bis 250m bei gleicher relativer Genauigkeit einfacher ist, als eine Messung im Nahfeld von 0m bis 3m, bei der mit ns-Genauigkeit gemessen werden muss, was normalerweise wiederum Photodioden und Verstärker im GHz-Bereich nötig macht. Erschwerend kommt noch Fremdlicht, Temperatur und der jeweilige Reflexionsgrad des zu messenden Objekts hinzu. Diese Parameter gehen in der Regel stark in die Entfernungsmessung ein.

Dabei werden aber in der Praxis oft ganz erhebliche Sendeleistungen (z.B. Laser, kurz zeitig gepulst 10 W) eingesetzt. EP1913420B1 beschreibt hier ein Verfahren vorzugsweise für die Nahfeldmessung, bei dem solche gepulsten Laser und LEDs für die Weitfeldmessung nicht zum Einsatz kommen können, da EP1913420B1 von einem getakteten Sendesignal ausgeht, dessen aktive Sendephasen lang genug sind, um in mindestens zwei Taktphasen geteilt werden zu können. In der zweiten Taktphase wird bei der in EP1913420B1 beschriebenen Methode die Amplitude des reflektierten Signals gemessen und die Kompensation durch die Bestrahlung mit einer zweiten Leuchtdiode nachgeregelt. Die Messung erfolgt dabei in der Art, dass das Empfängersignal mit dem Sendesignal und dem Taktpuls der zweiten Taktphase multipliziert und dann gefiltert wird. Hierbei werden alle Empfangssignalkomponenten, die nicht synchron zum einmultiplizierten Signal sind durch die Filterung unterdrückt.

In der ersten Taktphase wird die Phasenlage des reflektierten zum gesendeten Signal erfasst und die Phasenlage des Kompensationssignals so nachgeregelt, dass in Summe am Sensor ein Gleichsignal anliegt.

Die Messung erfolgt dabei in der Art, dass das Empfängersignal mit dem Sendesignal und dem Taktpuls der ersten Taktphase multipliziert und dann gefiltert wird. Hierbei werden wieder alle Empfangssignalkomponenten, die nicht synchron zum einmultiplizierten Signal sind durch die Filterung unterdrückt.

Diese Regelung durch Zuhilfenahme zweier Taktphasen ist bei sehr kurz, aber leistungsstark gepulsten Lasern oder LEDs für die Sendediode nicht mehr möglich. Hierauf wird im Folgenden noch weiter eingegangen werden.

Wie aus EP1913420B1 bekannt, tritt ein weiterer ungewollter Effekt auf, wenn der Zeitpunkt des Empfangssignals genau bestimmt wäre. Zusätzliches Fremdlicht in der Photodiode verändert etwas die Amplitude und die Anstiegszeit des Empfangssignals, sodass auch die Entfernungsmessung durch Fremdlicht beeinflusst werden kann.

Eine Möglichkeit zur Entfernungsmessung ist die Messung der Lichtlaufzeit zwischen einem Lichtstrahlung aussendenden Sender, einem diese Lichtstrahlung reflektierenden Objekt und einem Empfänger. Aufgrund der hohen Lichtgeschwindigkeit und der gewünschten Genauigkeit der Messung wird heutzutage mit extrem schnellen Verstärkern und bewusst klein und damit unempfindlicher gewählten Photodioden gearbeitet, die mit einer hohen Frequenz von z.B. 100 MHz betrieben werden können.

Aus EP1913420B1 ist nun - wie bereits angedeutet - ein Verfahren bekannt, dass das oben beschriebene Problem durch ein System löst, dass aus einem ersten getakteten Lichtsignal besteht, dass im Wesentlichen zuerst auf das zu messende Objekt und von dort auf den Sensor fällt und dem besagten zweiten Lichtsignal besteht, dass zu dem ersten Lichtsignal invertiert getaktet und mit bekannter Dämpfung auf den Sensor fällt und im Wesentlichen nicht auf das Objekt fällt und in der Amplitude und in der Phase so ausgeregelt wird, dass sich als Ausgangssignal des Sensors ein Gleichtaktsignal ergibt aus dem mit dem dort beschriebenen Verfahren die Regelsignale für das Kompensationssignal extrahiert werden.

Das in EP 1 913 420 B1 beschriebene Verfahren hat dabei den weiteren Nachteil, dass es nur eine mittlere Phasenverschiebung ermittelt. Das bedeutet in der Praxis, dass beispielsweise bei einer Anwendung als Park-Distance-Sensor in einem Automobil, der Sensor nicht in der Lage ist, einen schmalen Pfahl vor einer Wand zu erkennen. Ein Auto würde daher diesen Pfahl rammen. Das System ist also in dieser Form nur bedingt brauchbar.

Dieses Problem wird in der Offenlegungsschrift DE102007004973A1 durch Raummultiplex gelöst. Das bedeutet, durch eine Erhöhung der räumlichen Auflösung durch Einschränkung des Bestrahlungswinkels wird die Detektion ermöglicht. DE102007004973A1 sieht auch eine dynamische Änderung der Abstrahlrichtung beispielsweise durch Mikrospiegel vor.

Der wesentliche Nachteil der dort beschriebenen Methode ist jedoch ihre begrenzte Reichweite. Sie ist also für eine Abstandsmessung z.B. für fahrende Kfz zueinander nicht einsetzbar. Hierzu muss die Sendeleistung der Quelle des ersten getakteten Lichtsignals wesentlich erhöht werden.

Ein weiterer Nachteil der dort beschriebenen Methode ist, dass sie monofrequent ist und lediglich durch Frequenzhopping eine Störunterdrückung vorschlägt. Dies liegt daran, dass die Regelung mittels Phasenschieber erfolgt. Ein Phasenschieber führt zu einer Verzerrung des Signals. Die in EP 1 913 420 B1 und DE102007004973A1 arbeiten nur schmalbandig und können für moderne Störunterdrückungsverfahren mit breiteren Signalspektren nicht angewendet werden.

Ausgehend von diesem Stand der Technik liegt der vorliegenden Erfindung die Aufgabe zugrunde, ein Verfahren zur Lichtlaufzeitmessung zu schaffen, das die Vorteile der Offenlegungsschrift DE102007004973A1 und des Schutzrechts EP 1 913 420 B1 durch eine abweichende technische Lösung auf sich vereint und darüber eine erhöhte Sendeleistung durch Verwendung kurzzeitgepulster Quellen für das erste Lichtsignal zulässt. Des Weiteren soll das Verfahren multifrequente Sendesignale verarbeiten können.

Die folgende Beschreibung ist nur ein Beispiel für eine Verkörperung der Erfindung. Bevor die Erfindung im Detail beschrieben wird, ist daher darauf hinzuweisen, dass sie nicht auf jeweiligen Bauteile der Schaltung oder die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung und in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

In dem erfindungsgemäßen System wird die Amplitude und Verzögerung gleichzeitig und nicht sequenziell hintereinander gemessen. Die Regelung basiert auf einer Verzögerungsregelung und nicht, wie im Stand der Technik bekannt auf einer Phasenregelung.

Der Grundgedanke der Erfindung ist, dass die Verzögerungsinformation im Wesentlichen nur in den Flanken eines Sendepulses liegt. Das Plateau des Sendepulses zwischen den Flanken ist für die Informationsgewinnung hinsichtlich der Laufzeit des Lichtpulses irrelevant. Daher ist die hier investierte Sendeenergie verloren und senkt die Performance des Gesamtsystems.

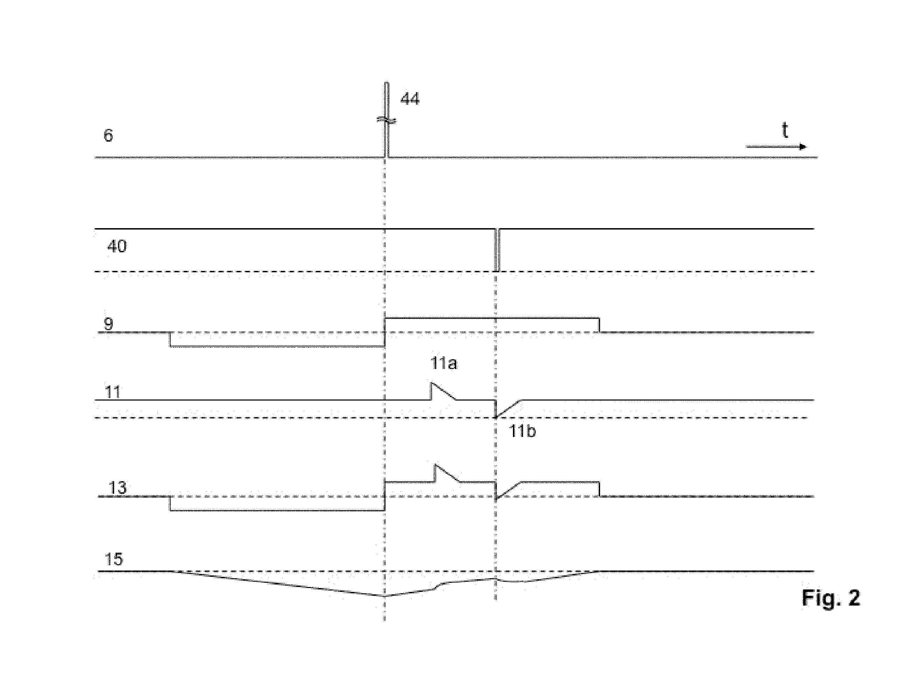

Entgegen den beiden vorgenannten Schriften EP1913420B1 und DE102007004973A1 ist es daher zweckmäßig, statt eines mehr oder weniger regelmäßig getakteten Rechtecksignals möglichst kurze, dafür aber umso höhere Pulse (44) (Fig. 2) bei gleicher Energie zu verwenden. Hierdurch wird die Ableitung des Sendepulses und somit die Energie, die auf die Gewinnung der eigentlichen Information verwendet wird, maximiert. Solche Pulse können beispielsweise bequem aus einem digitalen Bit-Strom durch Auswertung der steigenden bzw. fallenden Flanken erzeugt werden.

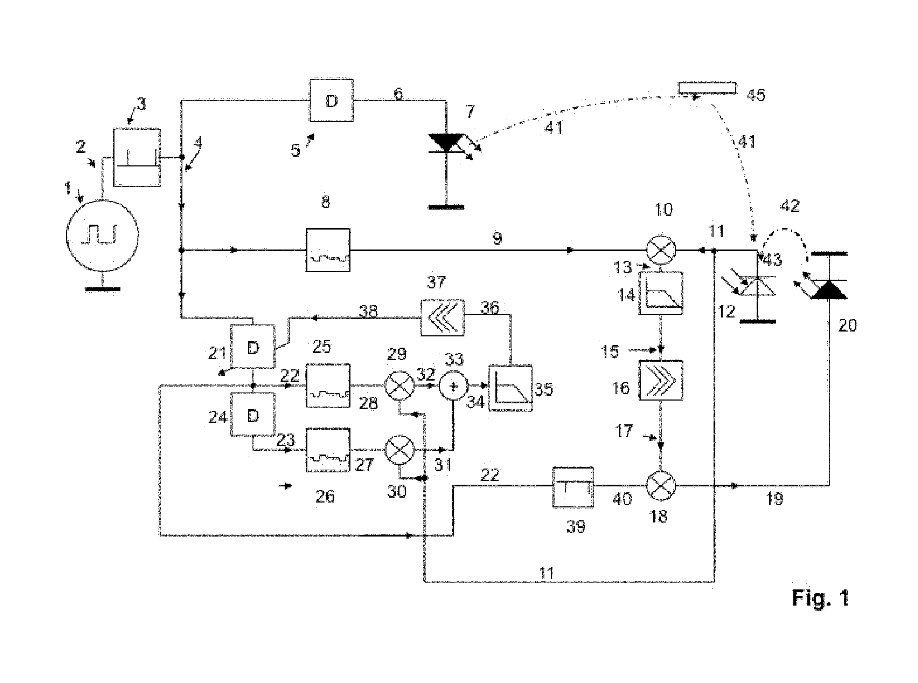

Im Folgenden wird die Erfindung an einem beispielhaften Systemschema (Fig. 1) erläutert. Andere Konfigurationen sind ausdrücklich denkbar.

Dem Empfänger (12) werden beispielsweise Signale (41, 42) von wenigstens einem ersten (7) und einem zweiten Sender (20) über zwei mehr oder weniger getrennte Signaltransportstrecken zugeleitet. Der erste Sender (7) ist dabei beispielsweise eine LED oder eine LASER LED, der zweite Sender (20) ist beispielsweise eine LED. Der Empfänger (12) ist beispielsweise eine Photodiode. Die Distanz des ersten Sender zum Empfänger ist typischerweise wesentlich größer als die Distanz des zweiten Senders zum Empfänger. Daher wird das vom ersten Sender (7) abgestrahlte Signal (41) bis zum Empfang durch den Empfänger (12) wesentlich stärker gedämpft, als das vom zweiten Sender (20) abgestrahlte Signal (42) vor dessen Empfang durch den besagten Empfänger (12). Bei der Ausbreitung im zwischen erstem Sender (7) und Empfänger (12) liegenden Freiraum wird das Signal (41) normalerweise mit 1/r² gedämpft. Der erste Sender (7) sendet das Signal (41) beispielsweise zu einem Objekt (45), dessen Entfernung/Reflexion bestimmt werden soll. Im Gegensatz zur Offenbarung EP1913420 B1 geschieht dies im Falle des ersten Senders (7) nur durch einzelne steile und damit breitbandige Pulse (44) und nicht durch ein mehr oder weniger monofrequentes Rechteck-Signal. Dabei sind die Sende-Pulse (44) so kurz, dass eine Amplituden-Bestimmung bei nachfolgender Phasenbestimmung des reflektierten, empfangenen Signals, mit der Methode wie in EP1913420B1 beschrieben, nicht mehr möglich ist. Wie bereits erwähnt, erfordert die Bestimmung einer Phase ein monofrequentes Signal, was bei EMV Problematiken, also bei Einstrahlung aus anderen Quellen, insbesondere anderen Systemen, nicht unproblematisch ist.

Das reflektierte, gepulste Signal (41) wird zum Empfänger (12) geleitet. Die Kompensationssignalquelle (20) sendet das modulierte Kompensationssignal (42) aus einem festgelegten Abstand und mit einer vorweg bekannten Übertragungscharakteristik direkt in den Empfänger (12). Die Empfangssignale (41, 42) der ersten Sendequelle (7) und der zweiten Sendequelle (20) - der Kompensationsquelle - werden spätestens vor dem Empfänger (12) zu einem gemeinsamen Signalstrom (43) summiert und durch den Empfänger (12) in ein gemeinsames Empfangssignal (11) umgewandelt. Es erfolgt dann mittels Amplituden- und Phasenregelung des Kompensationssignals (19) eine Kompensation der Zeiträume, in denen der Empfänger (12) kein Signal von der ersten Signalquelle (7) empfängt. Es ergibt sich bei idealer Regelung und idealen Verhältnissen ein konstanter Pegel des Empfangssignals am (11) Ausgang des Empfängers (12). Jede Abweichung von diesem stabilen Zielzustand ist eine Signalkomponente des Empfängerausgangssignals (11), die mit dem Sendesignal (6) des ersten Senders (7) korreliert ist.

In EP1913420B1 wird das Sendesignal (6) mit dem Ausgangssignal (11) des Empfängers (12) multipliziert. Bei der Verwendung von kurzen Pulsen als Sendesignal (6) ist dies nun nicht möglich, da die Impulsantwort des Systems auf diese Sendepulse (44, Fig. 2) gemessen am Ausgang des Empfängers (12) wesentlich später kommt und länger dauert als der Sendepuls (44) selbst dauert oder dauern darf. Eine Multiplikation wie in EP1913420B1 würde daher eine konstante Null ergeben. Das System, wie in EP1913420B1 beschreiben, funktioniert daher dann nicht.

Stattdessen wird beispielsweise durch einen typischerweise digitalen Signalgenerator (1) eine Pulsfolge (2) erzeugt. Um einen möglichst großen Störabstand zu anderen Systemen des gleichen Typs herzustellen, ist es beispielsweise sinnvoll, dass der Signalgenerator (2) eine Pseudozufallsfolge oder echte Zufallsfolge erzeugt. Dies kann beispielsweise dadurch sichergestellt werden, dass es sich bei dem Generator (1) um ein rückgekoppeltes Schieberegister handelt, das über ein einfach primitives Polynom zurückgekoppelt ist. Aus dieser Bit-Folge erzeugt nun ein Spike- oder Burst-Generator (3) das Basis-Spike- oder Burst-Signal (4).

Nun wird ein gewichtetes Torsignal (9) derart erzeugt, dass eine direkte Filterung dieses Signals durch eines der im System verbauten Filter (14, 35) eine Null als Ausgangssignal ergibt. Im Folgenden wird beispielhaft die Verwendung eines Wechselpulssignals als Torsignal diskutiert. Andere Torsignale sind denkbar.

Ein Wechsel-Puls-Generator (8) erzeugt auf Basis der gleichen Puls-Folge (2) wie der Burstgenerator (3) Wechselpulse mit einer Wechselpuls-Folge (9). Jeder Wechselpuls besteht beispielsweise immer aus einem negativen Rechteckpuls der unmittelbar von einem positiven Rechteckpuls gefolgt wird. Wenn im Folgenden von der Pulsposition von dermaßen definierten Wechselpulsen gesprochen wird, so ist damit der Zeitpunkt des Wechsels zwischen dem negativen zum positiven Rechteckpuls gemeint. Der positive und negative Recheckpuls eines Wechselpulses sind so lang und hoch, dass sie sich bei Integration genau aufheben. Damit ist die obige Bedingung für Torsignale erfüllt. Wichtig ist, dass die Dauer des positiven Rechteckpulsanteils der Wechselpulse stets gleich ist und dass diese Dauer die maximale messbare Verzögerung (Signallaufzeit) festlegt.

Das Wechselpulssignal (9) weist nun an allen den zeitlichen Stellen, an denen das Sendesignal (6) einen oder mehrere schnell aufeinander folgende schmale Impulse wie beispielsweise Spikes bzw. Bursts aufweist, einen Wechselpuls auf.

Das somit erzeugte Wechselpulssignal (9) wird mit dem durch den Empfänger (12) erfassten Empfangssignal (11) in einer Multiplikationseinheit (10) zu einem ersten Zwischensignal (13) multipliziert.

Dieses wird durch den ersten Tiefpass (14) zu einem DC ähnlichen Signal (15) gefiltert, was dann durch den Verstärker (16) zu einem ersten Regelsignal (17) verstärkt wird. Dieses erste Regelsignal (17) ist ein Maß für die Amplitude des reflektierten Signals (41). Aufgrund der Multiplikation ist dieses Signal proportional zu solchen Anteilen im Empfangssignal (11), die zum Sendesignal (6) im Rahmen einer maximal möglichen Verzögerung korrelieren.

Ein Signal (40), dessen Erzeugung später beschrieben wird, stellt quasi ein invertiertes Sendesignal (6) dar. Dieses ist gegenüber dem Sendesignal (6) für den ersten Sender (7) verzögert. Wie die besagte Verzögerung geregelt wird, wird ebenfalls später beschrieben.

Dieses invertierte Sendesignal (40) wird in der zweiten Multiplikationseinheit (18) mit dem ermittelten Verstärkerausgangssignal (17) multipliziert und dem zweiten Sender (20), dem Kompensationssender zugeführt. Durch die große Verstärkung des Verstärkers (16) wird dieses Signal so lange vergrößert bzw. verkleinert, bis der durch das System messbare Signalanteil des Sendesignals (6) am Empfänger (12) in dessen Empfangssignal (11), der durch den Pegel des Signals (15) repräsentiert wird, im zeitlichen Mittel null ist.

Die Verzögerung des quasi-invertierten Signals (40) gegenüber dem Sendesignal (6) und dem ersten Wechselpulssignal (9) wird durch ein Verzögerungselement (21), das geregelt ist.

Die Ermittlung der Regelgröße für die Verzögerungsstufe (21) wird später beschrieben.

Die Verzögerung der zweiten Verzögerungsstufe (24) wird knapp größer als die Zeitkonstante des durch das Tiefpassverhalten des Empfängers (12) definierten Tiefpasses gewählt.

Das bedeutet folgendes: Der durch den Sender (7) emittierte Impuls, beispielsweise Spike oder Burst, erscheint typischerweise als kleines Dreiecksignal (11a) im Empfängersignal (11). Die Breite dieses Signals (11a) entspricht typischerweise der Verzögerung, die für die Verzögerungsstufe (24) gewählt wird.

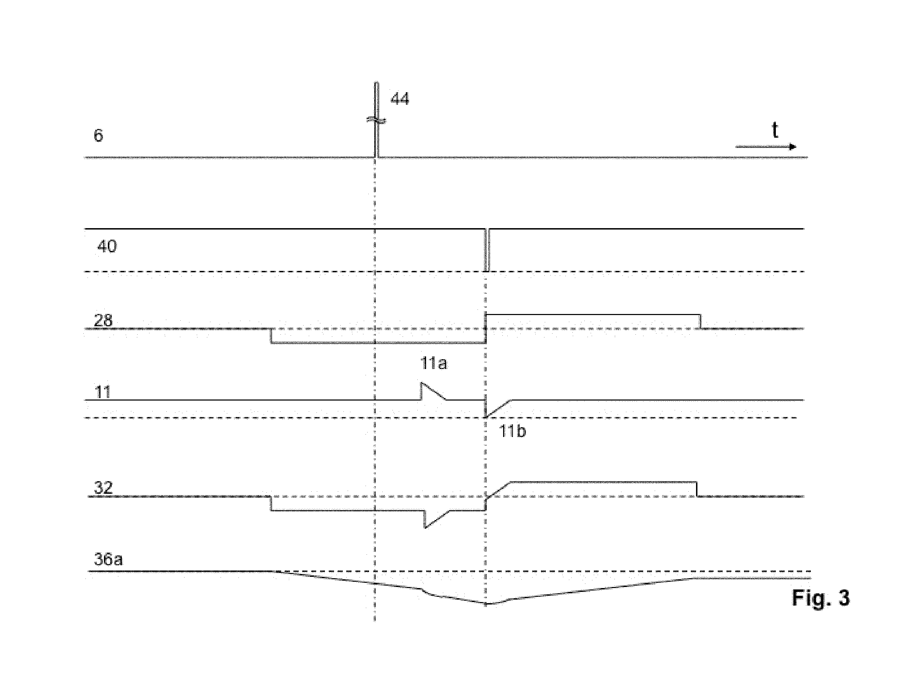

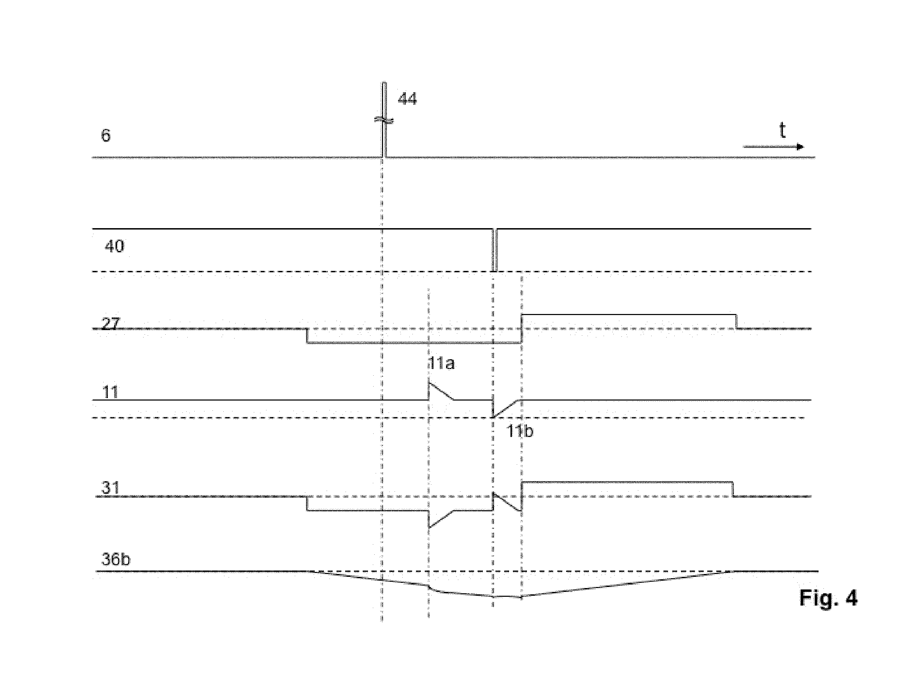

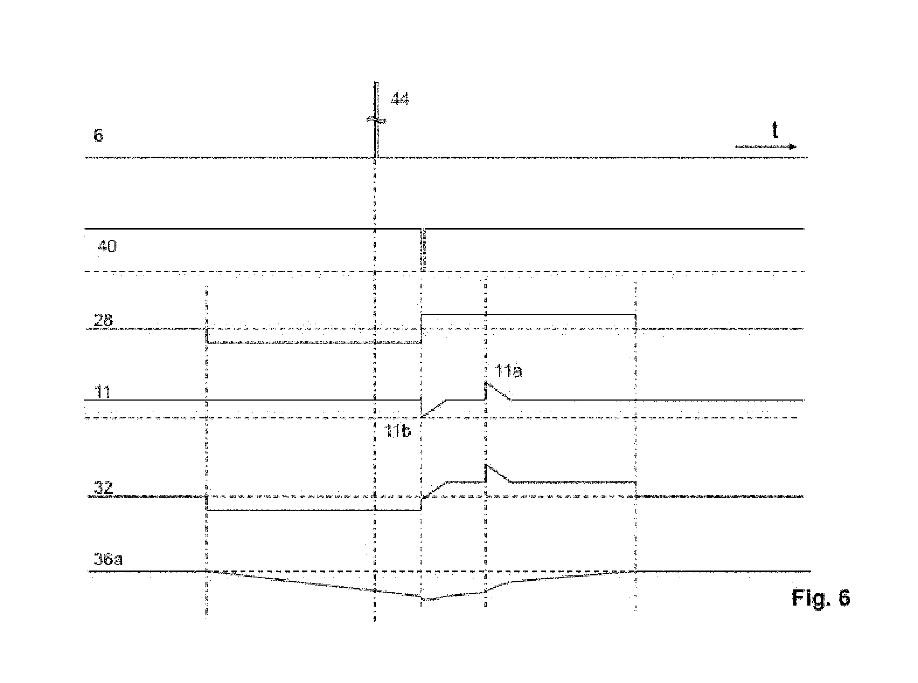

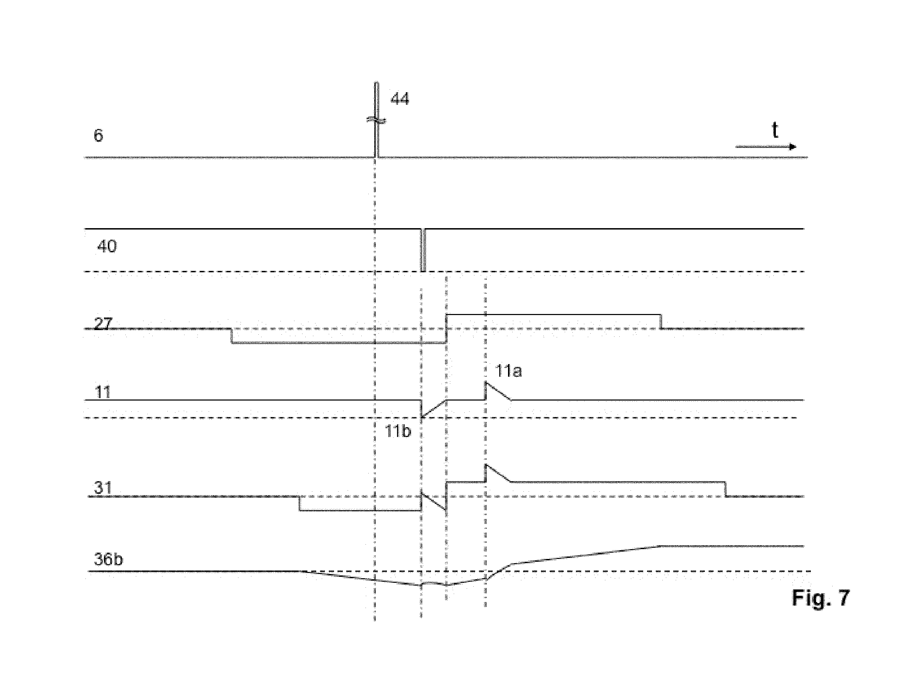

Aus den durch die Verzögerungsstufen (21, 24) gebildeten beiden aufeinander folgenden Signalen (22, 23) werden zwei Wechselpulssignale (28, 27) erzeugt und in zwei Multiplizierern (29, 30) mit dem Empfängersignal (11) zu zwei Verzögerungsvorsignalen (32, 31) multipliziert, die zu dem Verzögerungsregelvorsignal (34) in einer Addierstufe (33) zusammensummiert werden. Nach einer integrierenden Filterung in einem Tiefpassfilter (35) bleiben nur die Anteile als Quasi-DC-Signal über, die mit dem vom Generator (1) generierten Muster (2) korrelieren. Dieses Steuersignal (36) wird wieder in einem zweiten Verstärker (37) verstärkt und als Verzögerungsregelsignal (38) an den Regeleingang der regelbaren Verzögerungsstufe (21) geführt. Die Figuren 3, 4, 6, 7 zeigen dieses Signal (36) bei unterschiedlichen Verzögerungen des Kompensationssignals (40) gegenüber dem Sendesignal (6). Die Figuren 3 und 6 zeigen den durch den Tiefpass 35 gefilterten Signalanteil des Signals (34), der auf das Verzögerungsvorsignal (32) zurückgeht, als Signal (36a). Die Figuren 4 und 7 zeigen den durch den Tiefpass 35 gefilterten Signalanteil des Signals (34), der auf das Verzögerungsvorsignal (31) zurückgeht, als Signal (36b).

Das Ausgangssignal (23) der Verzögerungsstrecke (21) wird in einer Inversionseinheit (39) mit -1 multipliziert und mit einem positiven DC Pegel aufsummiert, so dass keine negativen Anteile im Ausgangssignal (40) auftauchen.

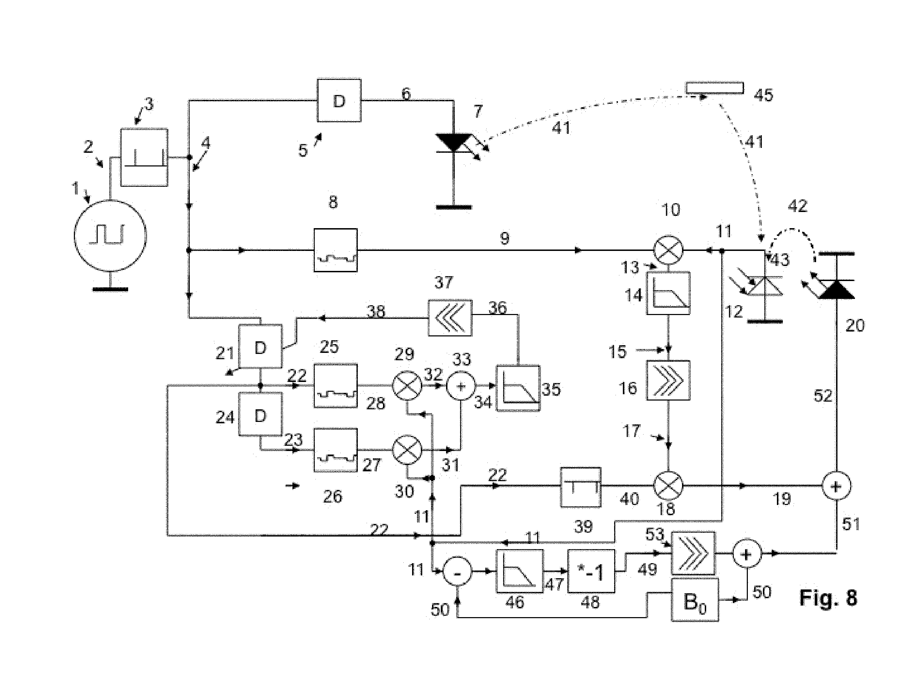

Um eine Blendung (Übersteuerung) des Empfängers (12) und/oder nachfolgender Stufen bei hohen Pulsleistungen des Senders (7) zu vermeiden, ist es zweckmäßig, den DC-Pegel des Empfangssignals (11) am Empfänger (12) stets im gleichen Arbeitspunkt zu halten. Hierfür kann eine gegengekoppelte Regelschleife wie in Figur 8 skizziert zusätzlich eingeführt werden.

Hierzu wird zunächst der Bias-Wert B₀ (50) vom Eingangssignal (12) subtrahiert und das so erhaltene Signal durch einen Tiefpass (46) gefiltert. Das so erhaltene Signal (47) wird invertiert (48) und verstärkt (53). Zu dem so erhaltenen Signal wird dann der Bias-Wert B₀ (50) wieder hinzuaddiert (51). Schließlich wird dieses Regelsignal mit dem alten Sendesignal (19) zum neuen Sendesignal (52) addiert.

Hierdurch ist sichergestellt, dass der DC Pegel am Empfänger 12 immer in etwa gleich ist.

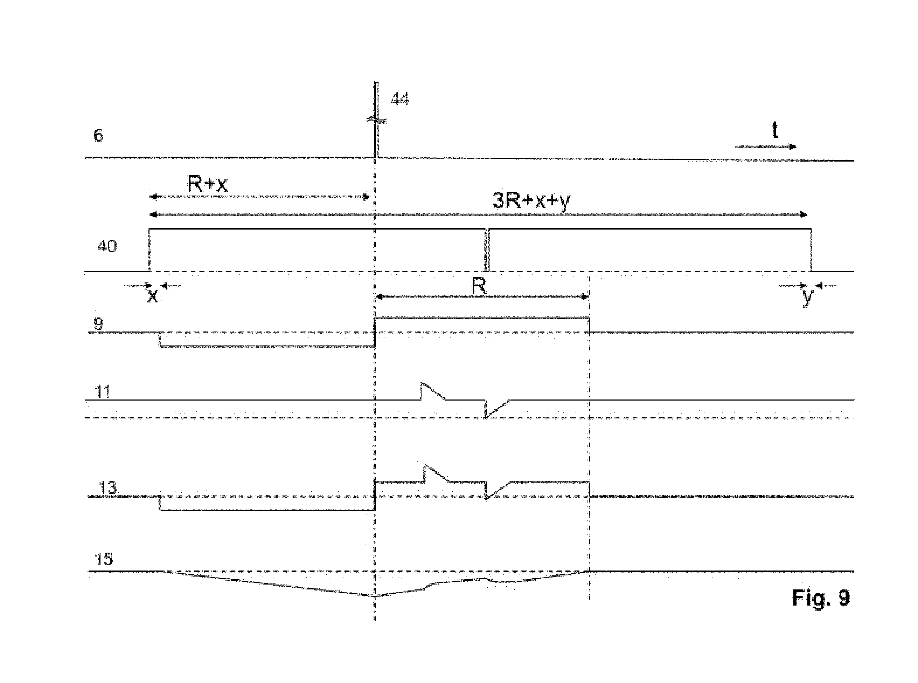

Schließlich sei noch erwähnt, dass das Kompensationssignal nur während der Messung aktiv sein muss. Figur 9 stellt eine Kopie der Figur 2 dar mit dem Unterschied, dass das Signal (40) vor dem Regelvorgang eingeschaltet wird und nach dem Regelvorgang ausgeschaltet wird. Hierdurch wird Sendeleistung gespart. Hat das Regelfenster die Größe R, so wird das Signal (40) zur Zeit R+x vor dem Senden des Sendepulses (44) eingeschaltet. X ist dabei positiv und so gewählt, dass die Regelung stabil ist, wenn das Messfenster bei -R bezogen auf den Sendezeitpunkt für den Sendepuls (44) beginnt.

Das Signal (40) wird zur Zeit Y nach dem Ende des Regelfensters beim Zeitpunkt 2R bezogen auf den Sendezeitpunkt des Sendepulses (44) also beim Zeitpunkt 2R+Y ausgeschaltet.

Die hierfür notwendigen Komponenten der Regelung sind zwecks Übersichtlichkeit nicht in Fig. 1 und Fig. 8 eingezeichnet.

Die Erfindung wird anhand der nachfolgenden Klauseln nochmals charakterisiert:
1. Verfahren zur Laufzeitmessung, insbesondere zur Abstandsmessung mit den Schritten:
   - Einspeisen mindestens eines Basissignals (2), das für die Erzeugung von Impulsen, vorzugsweise Spikes oder Bursts, bei Eintreten vordefinierter Signalbedingungen für diese Basissignale - insbesondere steigende und / oder fallende Flanken eines digitalen Bit-Stromes - genutzt wird, mit einem minimalen Impulsabstand, der mindestens die maximal zu erfassende Laufzeit, insbesondere das doppelte der zu erfassenden Laufzeit, beträgt;
   - Erzeugung von mindestens einem mit Impulsen behaftetem Signal (4) aus den besagten Basissignalen (2), wobei typischerweise die Impulsdauer kleiner als die Zeitkonstante eines Tiefpasses erster Ordnung ist, der das zeitliche Verhalten des langsamsten verwendeten Empfangskanals und/oder Empfängers (12) approximiert;
   - Senden mindestens eines durch besagte Impulse gepulsten, Signal tragenden Flusses, insbesondere eines gepulsten Lichtsignals, von mindestens einem ersten Sender (7), insbesondere einer Lichtquelle, in wenigstens eine Signaltransportstrecke (41), insbesondere eine Lichtstrecke, mit mindestens einer ersten Laufzeit an wenigstens einen Empfänger (12) zur Erfassung mindestens einer Laufzeit oder Veränderung der Laufzeit der ersten Signale (6) vom ersten Sender (7) zum Empfänger (12), insbesondere infolge der Modifikation der Sende-Transport- Empfangsstrecke (7,41,12) insbesondere als Folge von Annäherung, Anwesenheit und/oder Entfernung von Objekten (45);
   - Senden mindestens eines - typischerweise stets positiven - zweiten Signals (Kompensationssignals) (19) durch einen zweiten Sender (20), das gegenüber dem Impuls behafteten Signal (6) des ersten Senders (7) regelbar verzögert oder in der Phasenlage verändert ist und das derart geformt und in der Amplitude ausgeregelt ist, dass es bei zeitlicher Stabilität bei Summenbildung mit dem Impuls behafteten Signal (6) des ersten Senders (7) im Wesentlichen ein positives Konstantsignal (11) am Empfänger (12) bildet, wobei die Übertragungseigenschaften der Sende-Transport-Empfangsstrecke (20, 42, 12) vom zweiten Sender (20) zum Empfänger (12) typischerweise bekannt sind;
   - Empfangen der ersten Signale (41) und der zweiten Signale (42) mittels wenigstens eines Empfängers (12);
   - Ermitteln des aus den ersten Signalen (41) und zweiten Signalen (42) resultierenden Summensignals (43) durch Überlagerung am Empfänger (12) und Wandlung in ein Nutzsignal (11);
2. Verfahren nach Klausel 1, dadurch charakterisiert, dass Amplitude und Verzögerung oder Phase des resultierenden Signalanteils, der mit dem Sendesignal (6) des ersten Senders (7) zeitlich und hinsichtlich der Amplitude korreliert ist, in mindestens einem resultierenden Empfängersignal (11) mindestens eines Empfängers (12) gleichzeitig und nicht zeitlich sequentiell erfasst und durch Veränderung des Kompensationssignals (19) über mindestens einen der zweiten Sender (20) geregelt werden.
3. Verfahren nach einer der vorgehenden Klauseln, dadurch charakterisiert, dass mindestens ein erstes gewichtetes Torsignal (9) erzeugt wird, dessen Filterung (14) null ergibt und das mit dem Empfängersignal (11) multipliziert wird.
4. Verfahren nach Klausel 3 dadurch charakterisiert ist, dass das Torsignal ein Wechselpulssignal ist, wobei jeder Wechselpuls insbesondere wenigstens eine der folgenden Eigenschaften aufweist:
   - Er überlappt mit anderen Wechselpulsen des betreffenden Signals nicht.
   - Jeder Wechselpuls passiert die Filter (14, 35) nicht (Insbesondere ist sein Integral null.)
   - Der zeitliche Schwerpunkt des Wechselpulses korreliert mit einem Impuls des Impuls behafteten Sendesignals und steht mit diesem in einer definierten zeitlichen Beziehung.
5. Verfahren nach Klausel 3 oder 4, dadurch charakterisiert, dass das Torsignal (9) zu Ermittlung einer Regelgröße (17), insbesondere für den zweiten Sender (20) verwendet wird.
6. Verfahren nach einer der vorgehenden Klauseln, dadurch charakterisiert, dass mindestens ein zweites gewichtetes Torsignal (28 und / oder 27) erzeugt wird, dessen Filterung (35) null ergibt und das mit dem Empfängersignal (11) multipliziert wird.
7. Verfahren nach Klausel 6, dadurch charakterisiert, dass das Torsignal (28 und / oder 27) zu Ermittlung einer Regelgröße (17) zur Regelung einer Verzögerung (21) verwendet wird.
8. Verfahren nach einer der vorhergehenden Klauseln, dadurch gekennzeichnet, dass der Impuls ein Burst oder ein Spike oder eine zeitliche Abfolge derselben ist, wobei die Impulslänge kürzer als das Doppelte der Zeitkonstanten eines Tiefpasses erster Ordnung ist, der das zeitliche Verhalten des langsamsten verwendeten Empfangskanals und/oder Empfängers (12) approximiert.
9. Verfahren nach einer der vorhergehenden Klauseln, dadurch charakterisiert, dass mindestens ein Paar der Sender (7, 20) einen magnetischen Fluss und / oder ein elektrostatisches und/oder elektrodynamisches Feld und/oder einen Lichtfluss oder einen anderen Energiefluss aussenden oder die Eigenschaften eines zugehörigen Material- oder Materieflusses - insbesondere einer Flüssigkeit oder eines Fluids - modulieren und dass dieser durch mindestens einen Empfänger (12) empfangen bzw. analysiert wird.
10. Vorrichtung dadurch gekennzeichnet, dass sie dazu eingerichtet und ausgebildet ist, das Verfahren nach einer der vorhergehenden Klauseln auszuführen.

### Figuren

- Figur 1:: Beispielhafter Regelkreis
- Figur 2:: Beispielhaftes Zeitdiagramm der Amplitudenregelung für den Fall, dass der negative Puls des Signals (40) nach dem Eintreffen des reflektierten Pulses (44) liegt.
- Figur 3:: Beispielhaftes Zeitdiagramm der Verzögerungsregelung für nacheilende Pulse für den Fall, dass der negative Puls des Signals (40) nach dem Eintreffen des reflektierten Pulses (44) liegt.
- Figur 4:: Beispielhaftes Zeitdiagramm der Verzögerungsregelung für voreilende Pulse für den Fall, dass der negative Puls des Signals (40) nach dem Eintreffen des reflektierten Pulses (44) liegt.

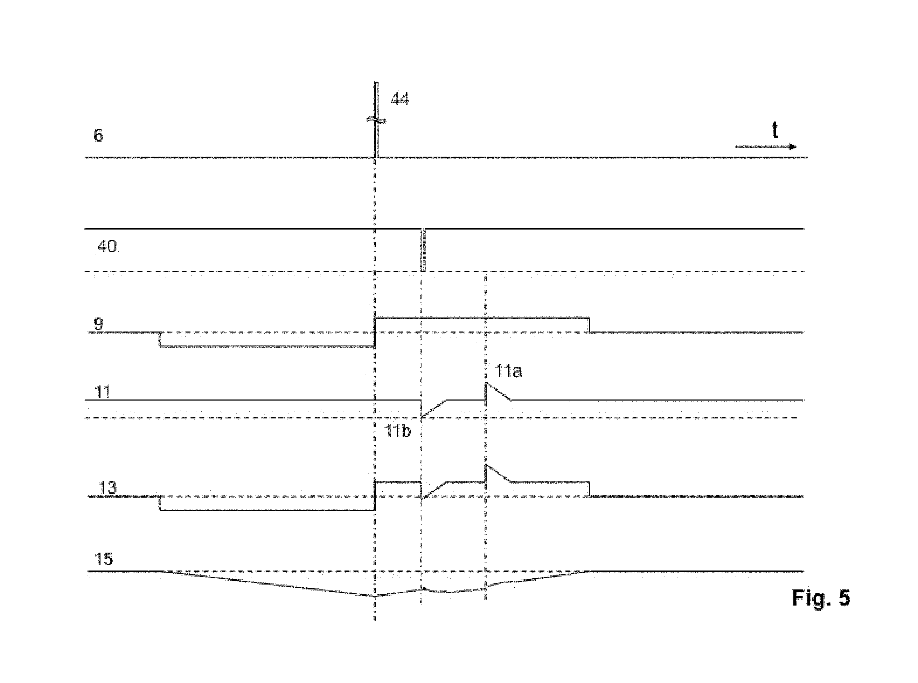

- Figur 5:: Beispielhaftes Zeitdiagramm der Amplitudenregelung für den Fall, dass der negative Puls des Signals (40) vor dem Eintreffen des reflektierten Pulses (44) liegt.
- Figur 6:: Beispielhaftes Zeitdiagramm der Verzögerungsregelung für nacheilende Pulse für den Fall, dass der negative Puls des Signals (40) vor dem Eintreffen des reflektierten Pulses (44) liegt.
- Figur 7:: Beispielhaftes Zeitdiagramm der Verzögerungsregelung für voreilende Pulse für den Fall, dass der negative Puls des Signals (40) vor dem Eintreffen des reflektierten Pulses (44) liegt.
- Figur 8:: Beispielhafter Regelkreis mit weitestgehend konstanter Empfangsamplitude
- Figur 9:: Beispielhaftes Zeitdiagramm der Amplitudenregelung für den Fall, dass der negative Puls des Signals (40) nach dem Eintreffen des reflektierten Pulses (44) liegt und das Signal (40) nur für die Regelung aktiviert wird.

## Patentansprüche

1. Verfahren zur Laufzeitmessung, insbesondere zur Abstandsmessung mit den Schritten:
― Einspeisen mindestens eines Basissignals (2), das für die Erzeugung von Impulsen, vorzugsweise Spikes oder Bursts, bei Eintreten vordefinierter Signalbedingungen für diese Basissignale ― insbesondere steigende und / oder fallende Flanken eines digitalen Bit-Stromes - genutzt wird, mit einem minimalen Impulsabstand, der mindestens die maximal zu erfassende Laufzeit, insbesondere das doppelte der zu erfassenden Laufzeit, beträgt;
― Erzeugung von mindestens einem mit Impulsen behaftetem Signal (4) aus den besagten Basissignalen (2), wobei typischerweise die Impulsdauer kleiner als die Zeitkonstante eines Tiefpasses erster Ordnung ist, der das zeitliche Verhalten des langsamsten verwendeten Empfangskanals und/oder Empfängers (12) approximiert;
― Senden mindestens eines durch besagte Impulse gepulsten, Signal tragenden Flusses, insbesondere eines gepulsten Lichtsignals, von mindestens einem ersten Sender (7), insbesondere einer Lichtquelle, in wenigstens eine Signaltransportstrecke (41), insbesondere eine Lichtstrecke, mit mindestens einer ersten Laufzeit an wenigstens einen Empfänger (12) zur Erfassung mindestens einer Laufzeit oder Veränderung der Laufzeit der ersten Signale (6) vom ersten Sender (7) zum Empfänger (12), insbesondere infolge der Modifikation der Sende-Transport- Empfangsstrecke (7,41,12) insbesondere als Folge von Annäherung, Anwesenheit und/oder Entfernung von Objekten (45);
― Senden mindestens eines - typischerweise stets positiven - zweiten Signals (Kompensationssignals) (19) durch einen zweiten Sender (20), das gegenüber dem Impuls behafteten Signal (6) des ersten Senders (7) regelbar verzögert oder in der Phasenlage verändert ist und das derart geformt und in der Amplitude ausgeregelt ist, dass es bei zeitlicher Stabilität bei Summenbildung mit dem Impuls behafteten Signal (6) des ersten Senders (7) im Wesentlichen ein positives Konstantsignal (11) am Empfänger (12) bildet, wobei die Übertragungseigenschaften der Sende-Transport-Empfangsstrecke (20, 42, 12) vom zweiten Sender (20) zum Empfänger (12) typischerweise bekannt sind;
― Empfangen der ersten Signale (41) und der zweiten Signale (42) mittels wenigstens eines Empfängers (12);
― Ermitteln des aus den ersten Signalen (41) und zweiten Signalen (42) resultierenden Summensignals (43) durch Überlagerung am Empfänger (12) und Wandlung in ein Nutzsignal (11);

2. Verfahren nach Anspruch 1, dadurch charakterisiert, dass Amplitude und Verzögerung oder Phase des resultierenden Signalanteils, der mit dem Sendesignal (6) des ersten Senders (7) zeitlich und hinsichtlich der Amplitude korreliert ist, in mindestens einem resultierenden Empfängersignal (11) mindestens eines Empfängers (12) gleichzeitig und nicht zeitlich sequentiell erfasst und durch Veränderung des Kompensationssignals (19) über mindestens einen der zweiten Sender (20) geregelt werden.

3. Verfahren nach einem der vorgehenden Ansprüche, dadurch charakterisiert, dass mindestens ein erstes gewichtetes Torsignal (9) erzeugt wird, dessen Filterung (14) null ergibt und das mit dem Empfängersignal (11) multipliziert wird.

4. Verfahren nach Anspruch 3 dadurch charakterisiert ist, dass das Torsignal ein Wechselpulssignal ist, wobei jeder Wechselpuls insbesondere wenigstens eine der folgenden Eigenschaften aufweist:
- Er überlappt mit anderen Wechselpulsen des betreffenden Signals nicht.
- Jeder Wechselpuls passiert die Filter (14, 35) nicht (Insbesondere ist sein Integral null.)
- Der zeitliche Schwerpunkt des Wechselpulses korreliert mit einem Impuls des Impuls behafteten Sendesignals und steht mit diesem in einer definierten zeitlichen Beziehung.

5. Verfahren nach Anspruch 3 oder 4, dadurch charakterisiert, dass das Torsignal (9) zu Ermittlung einer Regelgröße (17), insbesondere für den zweiten Sender (20) verwendet wird.

6. Verfahren nach einem der vorgehenden Ansprüche, dadurch charakterisiert, dass mindestens ein zweites gewichtetes Torsignal (28 und / oder 27) erzeugt wird, dessen Filterung (35) null ergibt und das mit dem Empfängersignal (11) multipliziert wird.

7. Verfahren nach Anspruch 6, dadurch charakterisiert, dass das Torsignal (28 und / oder 27) zu Ermittlung einer Regelgröße (17) zur Regelung einer Verzögerung (21) verwendet wird.

8. Verfahren nach einem der vorhergehenden Ansprüche, **dadurch gekennzeichnet, dass** der Impuls ein Burst oder ein Spike oder eine zeitliche Abfolge derselben ist, wobei die Impulslänge kürzer als das Doppelte der Zeitkonstanten eines Tiefpasses erster Ordnung ist, der das zeitliche Verhalten des langsamsten verwendeten Empfangskanals und/oder Empfängers (12) approximiert.

9. Verfahren nach einem der vorhergehenden Ansprüche dadurch charakterisiert, dass mindestens ein Paar der Sender (7, 20) einen magnetischen Fluss und / oder ein elektrostatisches und/oder elektrodynamisches Feld und/oder einen Lichtfluss oder einen anderen Energiefluss aussenden oder die Eigenschaften eines zugehörigen Material- oder Materieflusses - insbesondere einer Flüssigkeit oder eines Fluids - modulieren und dass dieser durch mindestens einen Empfänger (12) empfangen bzw. analysiert wird.

10. Vorrichtung **dadurch gekennzeichnet, dass** sie dazu eingerichtet und ausgebildet ist, das Verfahren nach einem der vorhergehenden Ansprüche auszuführen.
